# EUROPÄISCHE PATENTSCHRIFT

(11) **EP 3 877 304 B1**
(45) Veröffentlichungstag und Bekanntmachung des Hinweises auf die Patenterteilung: **07.06.2023**
(21) Anmeldenummer: 19808989.8
(22) Anmeldetag: 05.11.2019
(51) Int. Cl.: B65G 33/18, G01F 11/24

(54) **VORRICHTUNG ZUM DOSIEREN VON SCHÜTTGÜTERN**
APPARATUS FOR METERING BULK MATERIAL
DISPOSITIF DE DOSAGE DE PRODUITS EN VRAC

(30) Priorität: 09.11.2018 DE 102018128043
(43) Veröffentlichungstag der Anmeldung: 15.09.2021
(73) Patentinhaber: Kubota Brabender Technologie GmbH, 47055 Duisburg (DE)
(72) Erfinder: FELDGES, Robert, 47906 Kempen (DE); KNEZ, Jürgen, 47178 Duisburg (DE)
(74) Vertreter: Schoenen, Norbert
(86) Internationale Anmeldenummer: PCT/EP2019/080165
(87) Internationale Veröffentlichungsnummer: WO 2020/094605

(56) Entgegenhaltungen:
- EP-A2- 2 400 059
- DE-A1- 1 409 835
- FR-A- 1 326 933
- US-A- 4 368 833
- US-A1- 2005 042 064

## Beschreibung

Die Erfindung betrifft eine Vorrichtung zum Dosieren von Schüttgütern nach dem Oberbegriff von Anspruch 1, insbesondere ein Dosiergerät für Feststoffe, im Wesentlichen bestehend aus Produktvorlage und kontinuierlicher Produktförderung, nämlich einen materialschonenden, hochpräzisen Pulverdosierer für anspruchsvolle Anwendungen z.B. für die pharmazeutische Industrie, Spezialchemie.

Das Feststoffdosiergerät ist vorrangig für Pulver, Materialien, wie unter (a) definiert. Alternative Materialien (b) sind nicht auszuschließen (im Folgenden "Produkt" genannt):
a. Beispiele für Pulver:
   o Granulate gemäß der pharmazeutischen Industrie
   o Stäube
   o Aerosole
   o Nanomaterialien
   o Gifte, Wirkstoffe, Feinchemikalien, APIs
b. Andere Materialien (Pulver, Granulate gemäß allg. Chemie und Industrie) sind nicht ausgeschlossen.

Die Erfindung steht im direkten Zusammenhang mit folgenden Trends der chemischen Industrien.
(1) Pharmazeutische Industrie:
   Ein Trend in der Industrie ist die Umstellung von Batch / Chargen-Produktion auf kontinuierliche Produktion. Aufgrund der branchenüblichen Vorgaben zur Rückverfolgbarkeit und Genauigkeit ist eine neue Dosiertechnik gefordert.
(2) Sonstige Industrie:
   Auch in der Lebensmittelindustrie werden Stoffe verarbeitet, die in hoher Konzentration eine Gefahr darstellen. ATEX ist ebenfalls ein Thema in dieser Industrie. Daher gibt es auch in dieser Branche Anfragen zu staubdichten Dosierern.
(3) Spezialchemie / Gefahrstoffe:
   Die Arbeitssicherheit bei der Verarbeitung von Gefahrstoffen kann mit vorhandener Dosiertechnik oft nur durch den Einsatz kostspieliger Isolation der Dosiergeräte gewährleistet werden. Eine Anforderung in dieser Industrie sind staubdichte Dosiergeräte, die keine Isolatoren benötigen (OEB).

### Stand der Technik

1) Bislang verfügbare Feststoffdosierer lösen folgende Problemstellungen nur unzureichend:
   a. Verweilzeitverteilung des im Dosierer befindlichen Produktvolumens
   b. Mechanische Beanspruchung des Produkts im Schneckendosierern zu hoch, bzw. agglomeratfreie Dosierung nicht möglich
   c. Gleichmäßiger Produktaustrag bei geringen Dosierleistungen
   d. Großer Verstellbereich der Dosierleistung
   e. Das Dosieren von unterschiedlichen Produkten mit einer stark unterschiedlichen Fließeigenschaften in einem Dosierer Produkteigenschaften von fluidisierend bis stark kohäsiven / allgemein nicht fließfähigen Produkten
   f. Dosierer, der einen staubfreien Betrieb ermöglicht und damit die Voraussetzung zu einer OEB Zertifizierung erfüllt
2) Aufgrund der unter (1) genannten Problemstellungen gibt es für diverse Anwendungen in der Spezialchemie noch kein geeignetes Feststoffdosiergerät. Weiterhin können diverse Prozesse nur unter erheblichem Aufwand betrieben werden, da ohne staubdichte Dosierer ATEX-Zonen und MAK-Werte durch aufwändige bauseitige Maßnahmen und entsprechende Auslegung der Komponenten und Maschinen Rechnung getragen werden muss. Bei der Realisierung solcher Anlagen ist es elementar, verhindern zu können, dass die Atmosphäre einer ATEX-Zone in eine Nicht-ATEX-Zone eindringt, oder mit dem entsprechenden Fachbegriff, eine sogenannte Zonenverschleppung stattfindet. Die Folge wäre, dass z.B. eine entzündbare Atmosphäre auf eine Zündquelle trifft.

Aus der EP 2 400 059 A2 sind ein Verfahren zur Herstellung eines Straßenbelags, ein Beschicker, ein Straßenfertiger und ein Einbauzug bekannt. Aus dieser Schrift sind die Merkmale des Oberbegriffs nach dem Anspruch 1 bekannt. Der Straßenfertiger enthält zwei Förderschnecken und Leitbleche, die oberhalb der Förderschnecken angeordnet sind. Die Leitbleche, welche in der vorliegenden Anmeldung Schüttgutblenden genannt werden, decken die Schnecken jedoch in Längsrichtung und nicht in Querrichtung ab. Sie erstrecken sich außerdem nicht über die gesamte Breite der jeweiligen Förderschnecke.

Aus der DE 10 2015 118 355 A1 ist eine Dosiereinrichtung einer landwirtschaftlichen Verteilermaschine bekannt. Sie enthält mehrere Förderschnecken und ebenfalls Leitbleche, also Schüttgutblenden, welche allerdings die Förderschnecken nicht abdecken, sondern senkrecht zur Längsachse der Förderschnecken und quer zur Förderrichtung angeordnet sind.

Eine ähnliche Anordnung von Förderschnecken und Leitbleche ist aus der DE 20 2014 010 804 U1 bekannt. Auch hier sind nicht quer zur Längsachse der Förderschnecken verlaufende Zonen von den Leitblechen abgedeckt.

Aus der DE 199 12 689 A1 ist eine Austrageeinheit für Schüttgutbunker mit mehreren Förderschnecken bekannt. Auch aus dieser Veröffentlichung geht die in Anspruch 1 genannte Anordnung von Schüttgutblenden bezüglich der Förderschnecken nicht hervor.

Ferner sei die DE 35 02 342 A1 genannt, welche eine Einrichtung zum Sammeln und Fördern von Schüttgut beschreibt. Auch aus dieser Schrift gehen die technischen Merkmale des Anspruchs 1 der vorliegenden Anmeldung nicht hervor.

Zum Stand der Technik werden außerdem genannt:
EA WAHL US2800252, EA WAHL US3151782, GEA WO2013182869, Hess US3212624, Kardux US4945957, KTron US20070170209A1, Schenck DE102007055566B4, Schenck DE102010009753B4, Schenck EP1220804B1, Schenck EP1401747B1, Schenck EP1954610B1, VibraScrew US5154326, VibraScrew US5937996.

### Aufgabe und Lösung der Erfindung

Aufgabe der Erfindung: Es sollen die oben genannten Nachteile des Standes der Technik vermieden werden.

Diese Aufgabe wird erfindungsgemäß durch die Merkmale des Anspruchs 1 gelöst.

Es sei zunächst darauf hingewiesen, dass bei den mit Schnecken arbeitenden Dosiereinrichtungen die Schnecken immer von hinten befüllt werden. Erreicht wird erfindungsgemäß eine schärfere Trennung nacheinander eingefüllter zu dosierender Substanzen (First in - First out) mit möglichst geringem Mischbereich mittels mehrerer Schnecken und den Schüttgutblenden, da jede Schnecke nur an einer bestimmten Zone befüllt wird, also nicht über die gesamte Länge. Folglich ist der Vermischungsbereich deutlich kleiner als im Stand der Technik.

Folgende Vorteile werden unter anderem durch die Erfindung erzielt:
Vorteil a: Die Verweilzeitverteilung des im Dosierer befindlichen Produktvolumens wird reduziert.

Dieser Vorteil ist sehr wichtig. Erläuterung: Dosierwaagen tragen kontinuierlich aus und werden periodisch wieder befüllt. Eine wichtige Forderung der Qualitätssicherung, mit dem die Anlagenbetreiber konfrontiert werden, lautet wie folgt: Das bei der periodischen Befüllung hinzu gegebene Schüttgut darf nicht mit dem bereits in der Dosierwaage befindlichen Material vermischt werden (Prinzip "First-In-First-Out").

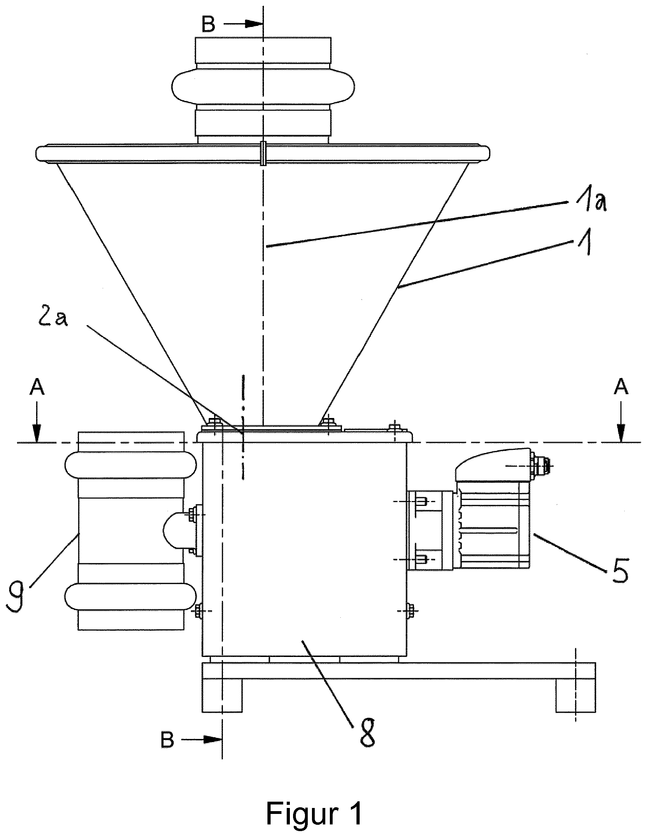

Dies wird erreicht durch:
Kegelförmige Produktvorlage (1) und den asymmetrischen Austritt (2) (siehe (1a) zu (2a) in Figur 1) und den Schüttgutentlastungsteller (3) sowie die Vibration dieses gesamten Aufbaus: Vibrationsantrieb(e) (7)

Der Massenfluss (Schnitt A-A) wird ermöglicht durch den asymmetrischen Schneckentrog (4), die Schüttgutblenden (10), die drei Förderschnecken (6), sowie die Vibration dieses gesamten Aufbaus: Vibrationsantrieb(e) (7)

Vorteil b: Die mechanische Beanspruchung des Schüttguts wird stark reduziert, weil die zum kontinuierlichen Dosieren benötigte Aktivierung des Schüttguts erreicht wird, ohne drehende Teile zu verwenden, die im direkten Kontakt mit dem Schüttgut stehen.

Dies wird erreicht durch:
Kegelförmige Produktvorlage (1) und den asymmetrischen Austritt (2) (siehe (1a) zu (2a) in Figur 1) und den Schüttgutentlastungsteller (3) sowie die Vibration dieses gesamten Aufbaus: Vibrationsantrieb(e) (7)

Ein sehr kurzes Schneckenrohr (9).

Vorteil c: Gleichmäßiger Produktaustrag, im Besonderen bei geringen Dosierleistungen, wird erreicht.

### Mit anderen Worten: Reduzierung der Pulsation

Dies wird erreicht durch:
Hauptsächlich durch die Förderschnecken (6) 3- und 4-gängig.

Eingangsvoraussetzung ist allerdings eine gleichmäßige Füllung aller Schnecken. Dies wird erreicht durch (identisch mit Vorteil a):
Kegelförmige Produktvorlage (1) und den asymmetrischen Austritt (2) (siehe (1a) zu (2a) in Figur 1) und den Schüttgutentlastungsteller (3) sowie die Vibration dieses gesamten Aufbaus: Vibrationsantrieb(e) (7)

Der Massenfluss (Schnitt A-A) wird ermöglicht durch den asymmetrischen Schneckentrog (4), die Schüttgutblenden (10), die drei Förderschnecken (6), sowie die Vibration dieses gesamten Aufbaus (Vibrationsantrieb(e) (7)). Vibrationsantriebe sind alle verfügbaren Maschinen, die Schwingungen oder Impulse erregen, wie z.B. Magneterreger, Klopfer, Kugelvibratoren, Unwuchtmotoren oder Richterreger.

Vorteil d: Großer Verstellbereich der Dosierleistung wird erreicht.

Dies wird erreicht durch: Im niedrigen Drehzahlbereich durch die bis zu 4-gängigen Schnecken und den Antrieb (5).

Im hohen Drehzahlbereich durch die Vibrationsantriebe (7) sowie der Vorlage und den Massenfluss (siehe A). Im Stand der Technik nimmt der Schneckenfüllgrad bei hohen Drehzahlen zu stark ab, sodass mehr Drehzahl nicht annähernd linear mehr Schüttgut-Förderung verursacht.

Vorteil e: Das Dosieren von unterschiedlichen Produkten mit einer stark unterschiedlichen Fließeigenschaften in einem Dosierer. Produkteigenschaften von fluidisierend bis stark kohäsiven / allg. nicht fließfähigen Produkten.

Dies wird erreicht durch die gleichen Teile wie bei Vorteil a.

Weiterhin durch das Installieren verschiedenster Schneckentypen / modularer Aufbau: Drei Schnecken, 2 Schnecken, 1 Schnecke, 2-, 3- und 4gängige Schnecken, Konkavschnecken, Spiralschnecken, ineinander kämmende Schnecken, selbstreinigende Schnecken, gleich läufige Schnecken, gegenläufige Schnecken.

Vorteil f: Staubfreier Betrieb wird ermöglicht und damit die Voraussetzung zu einer OEB Zertifizierung erfüllt.

Dies wird erreicht durch: Durch feste / staubdichte Anbindungen zwischen den einzelnen Komponenten.

Am wichtigsten ist: Das pulsationsarme Dosieren für viele verschiedene Anwendungen. Verschiedene Anwendungen bedeuten:
- verschiedene Drehzahlen (Austragsleistungen)
- verschiedene Schüttgüter

An zweiter Stelle steht: First-In-First-Out / Massenfluss / geringe Verweilzeitverteilung

Die Erfinder haben bei der Entwicklung der erfindungsgemäßen Anlage die folgenden technischen Schwierigkeiten in nicht naheliegender Weise überwunden:
- Aktivierung des Schüttguts ohne:
   Drehende Teile, die eine Vermischung verursachen mit dem Ziel: First-In-First-Out Hohen Energieeintrag in das Schüttgut mit dem Ziel: Brückenbilden vermeiden, Agglomerate verhindern
- Geringe Pulsation bei geringen Drehzahlen
- Maßnahmen, die das Füllen der Schnecken bei hohen Drehzahlen ermöglichen Vorteilhafte Ausgestaltungen der Erfindung sind in den Unteransprüchen angeführt.

### Ausführungsbeispiel

Im Folgenden wird ein Ausführungsbeispiel der Erfindung anhand von Zeichnungen näher beschrieben. In allen Zeichnungen haben gleiche Bezugszeichen die gleiche Bedeutung und werden daher gegebenenfalls nur einmal erläutert.

Es zeigen
- Figur 1: Produktionsrichtung von rechts nach links, Seitenansicht,
- Figur 2: Schnittansicht gemäß Figur 1 entlang der Linie von A bis A, Ansicht von oben,
- Figur 3: Schnittansicht gemäß Figur 1 entlang der Linie von B bis B,
- Figuren 4 bis 7: den Fließweg des Schüttguts im Dosiergerät, und zwar

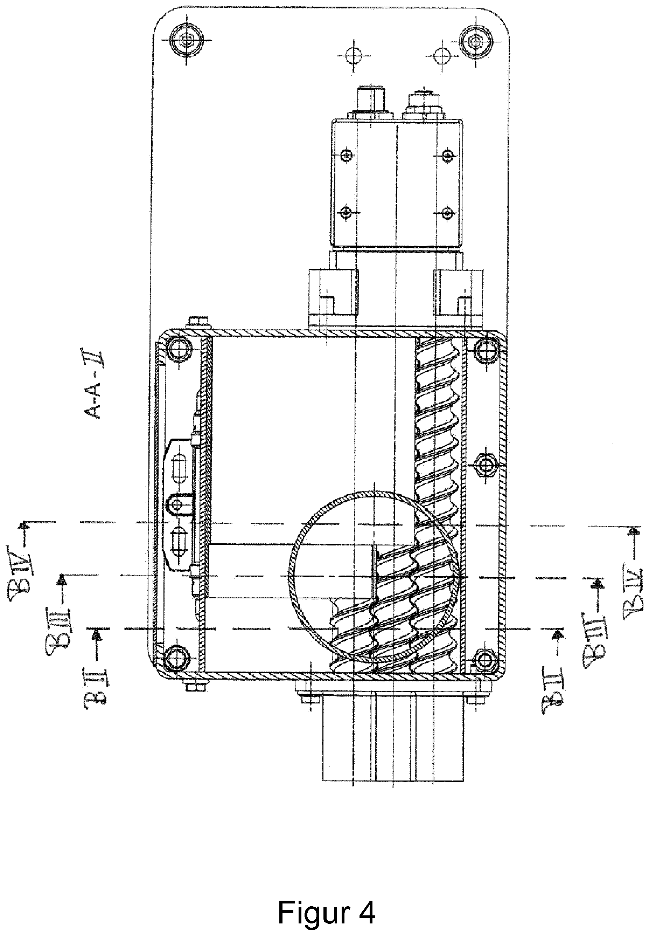

- Figur 4: Schnittansicht gemäß Figur 1 entlang der Linie von A bis A,

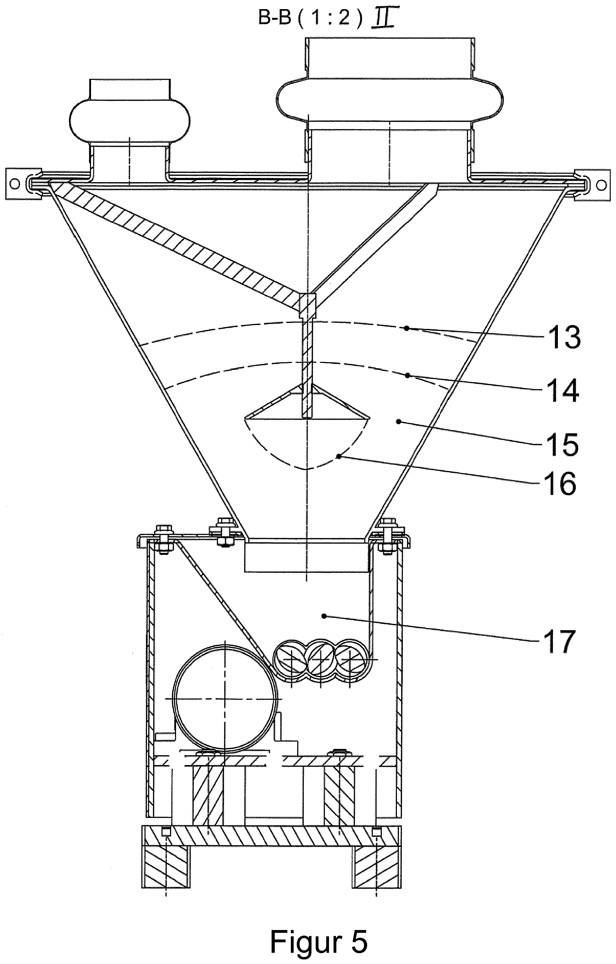

- Figur 5: Schnittansicht gemäß Figur 4 entlang der Linie von B II bis B II,

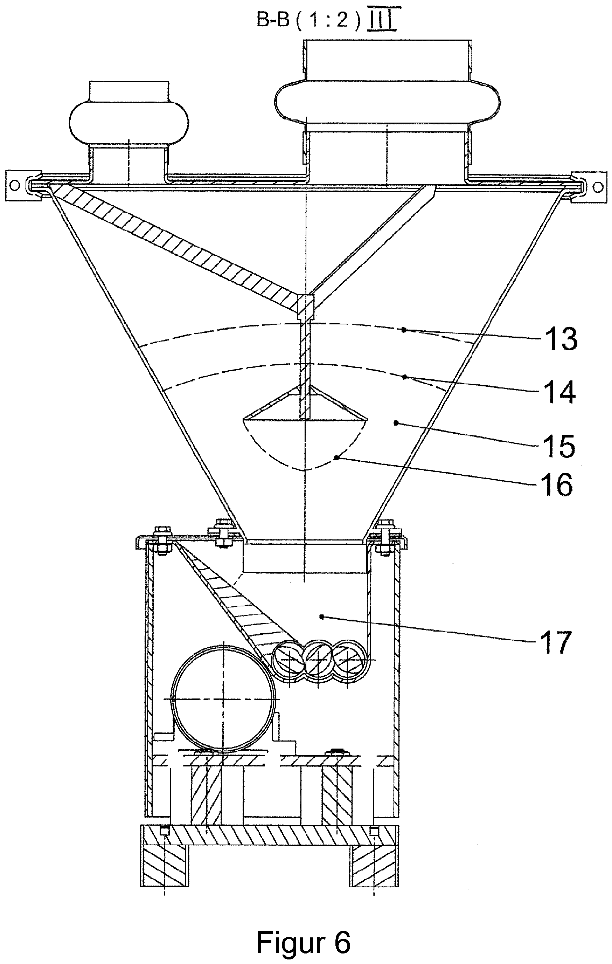

- Figur 6: Schnittansicht gemäß Figur 4 entlang der Linie von B III bis B III,

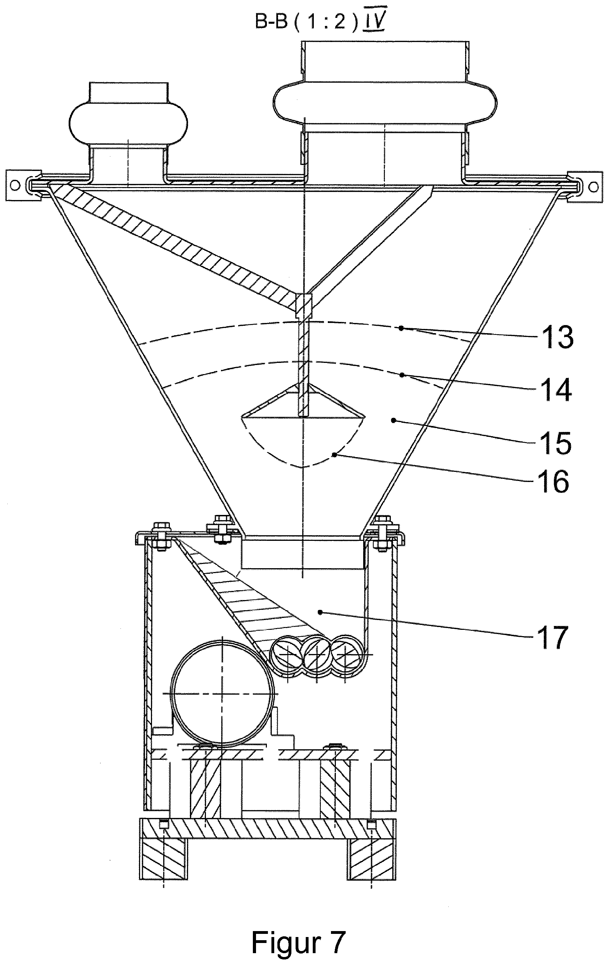

- Figur 7: Schnittansicht gemäß Figur 4 entlang der Linie von B IV bis B IV,

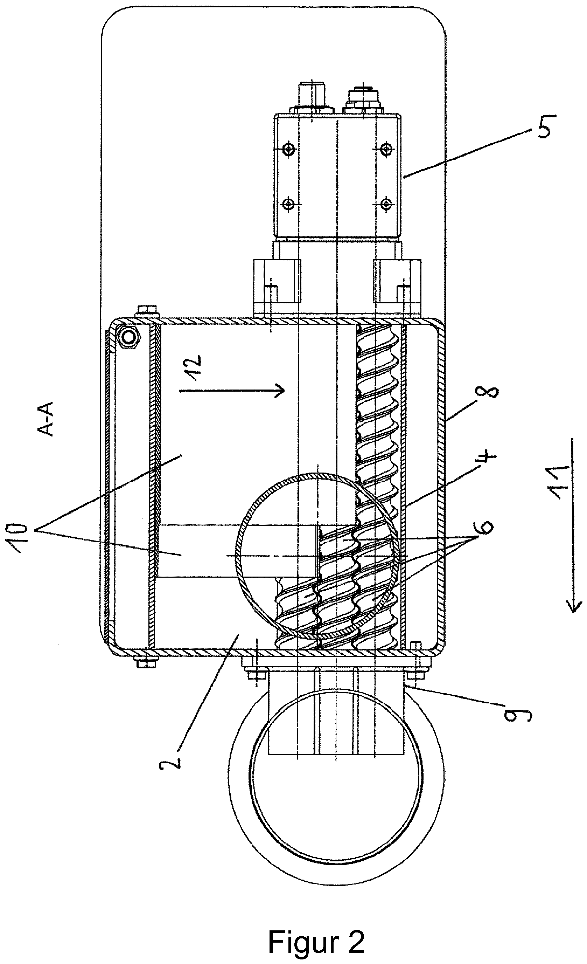

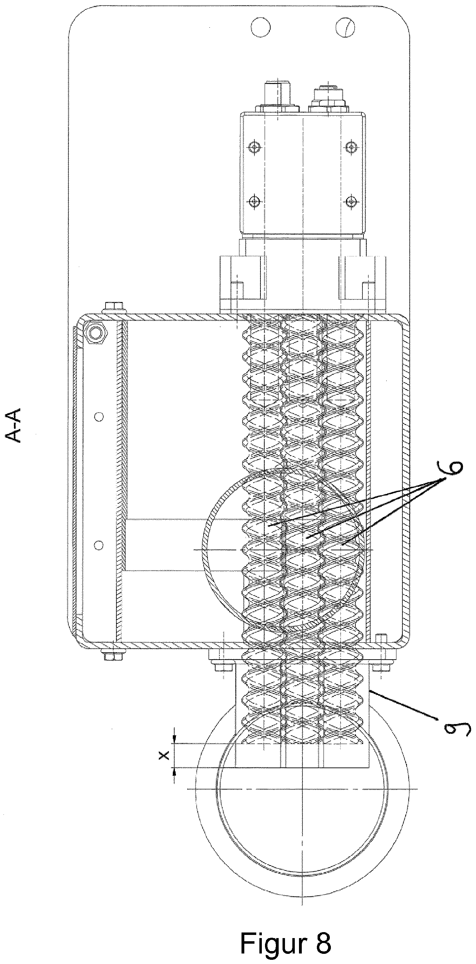

- Figur 8: Schnittansicht gemäß Figur 2, aber mit Abstand "X" zwischen Schnecken 6 und Schneckenrohr 9,

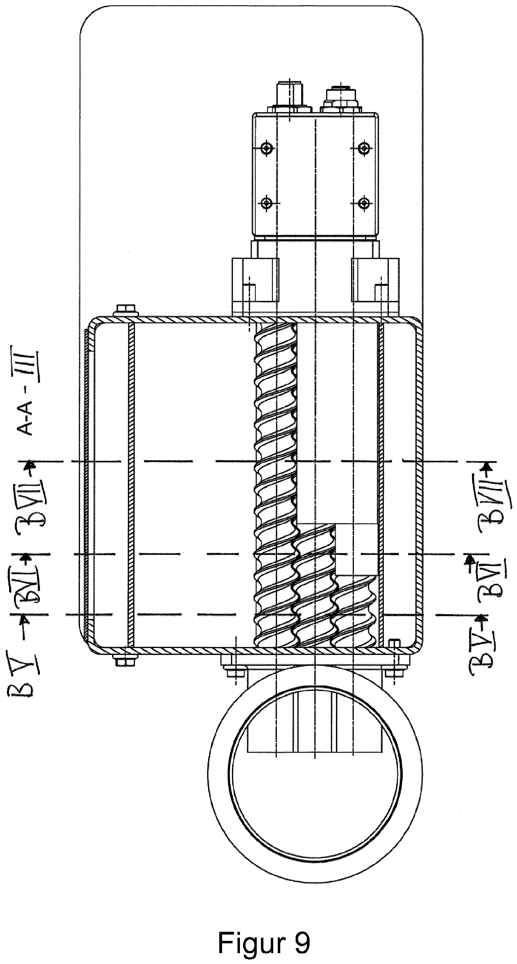

- Figuren 9 bis 12: eine alternative Ausführung gemäß der Erfindung mit Einbauten im Trog auf der steilen Trogseite, und zwar
- Figur 9: Ansicht gemäß Figur 2,

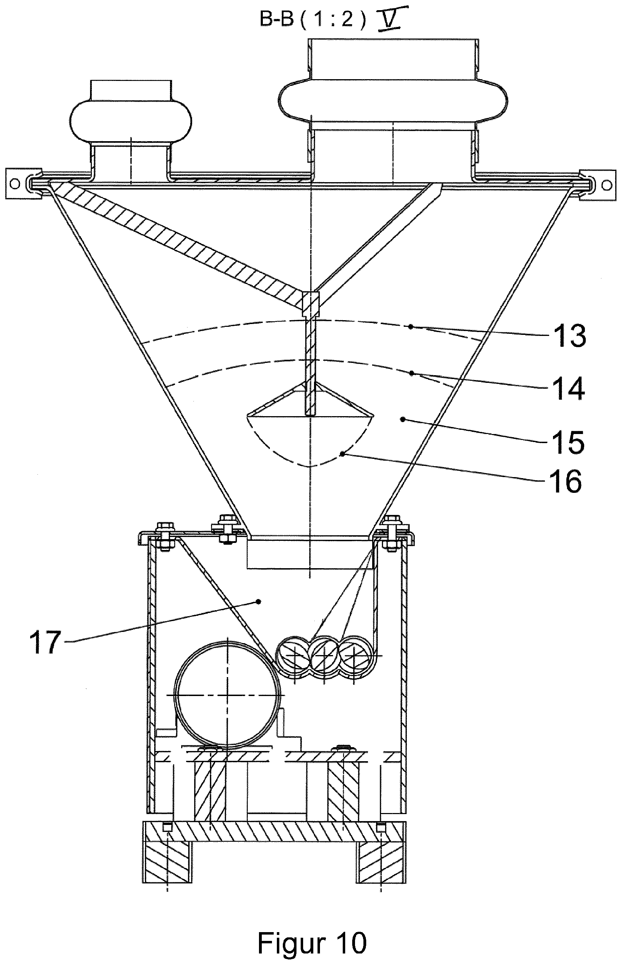

- Figur 10: Ansicht gemäß Figur 5,

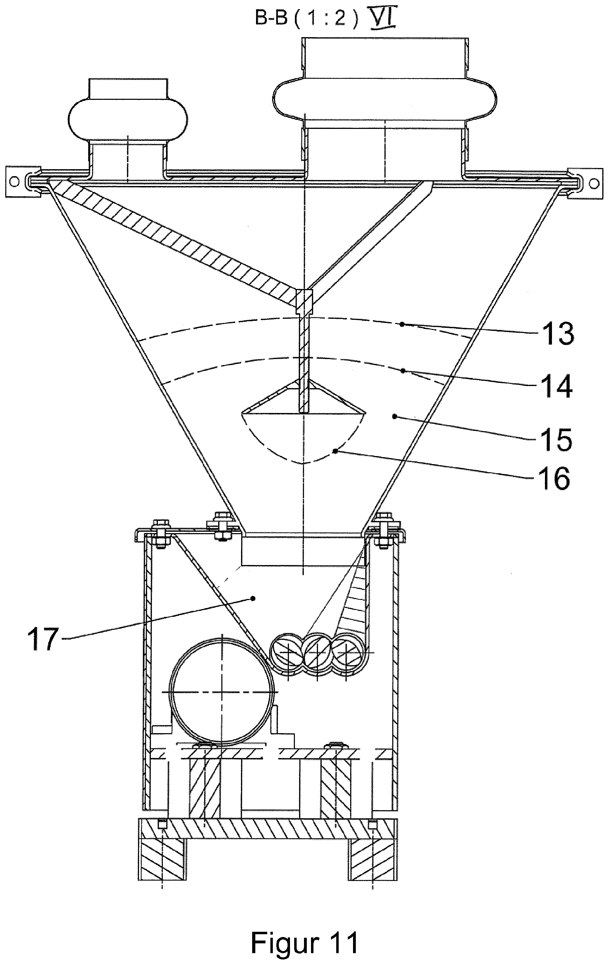

- Figur 11: Ansicht gemäß Figur 6,

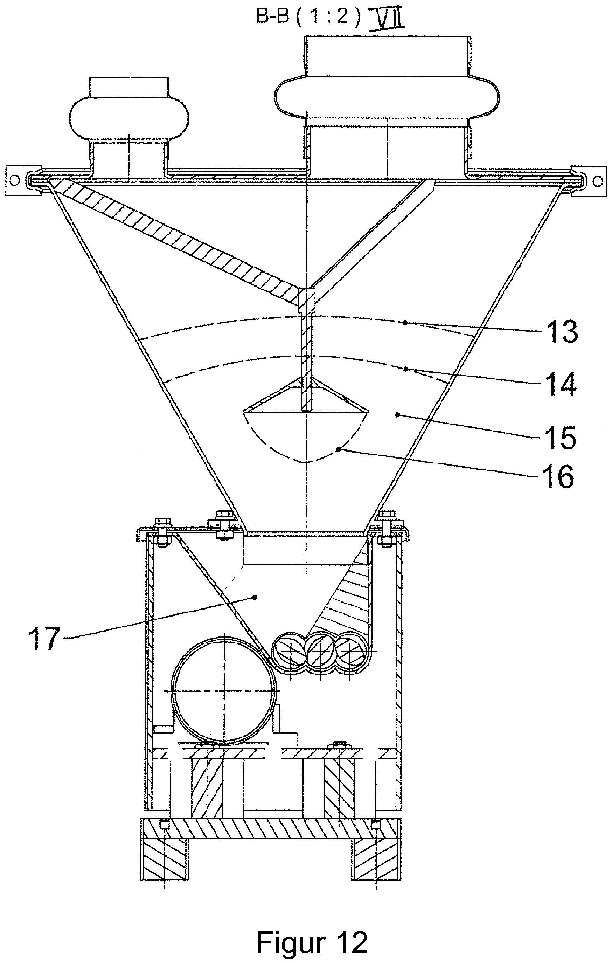

- Figur 12: Ansicht gemäß Figur 7,

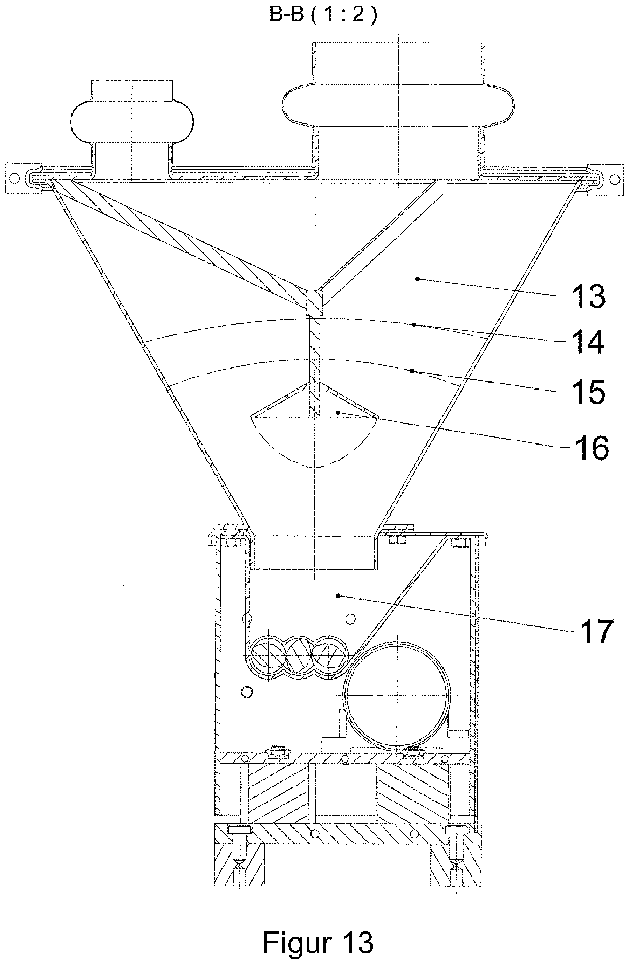

- Figuren 13 bis 14: eine weitere alternative Ausführung gemäß der Erfindung, wobei der Verfahrensteil gespiegelt ist, und zwar
- Figur 13: Ansicht gemäß Figur 5,

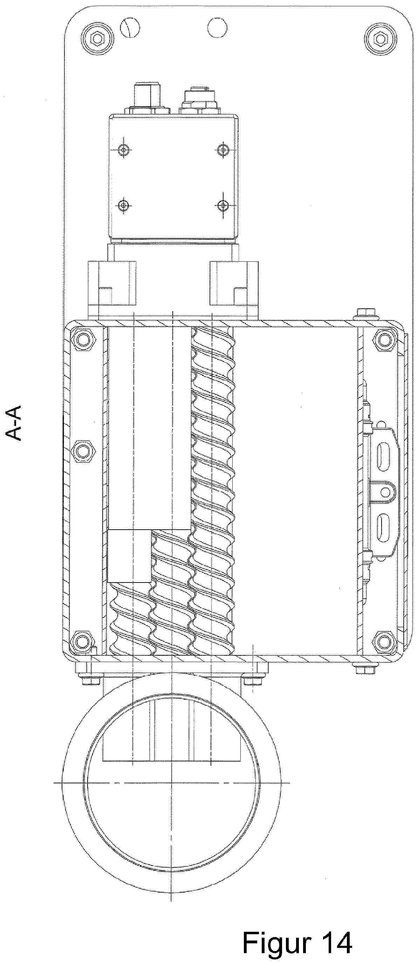

- Figur 14: Ansicht gemäß Figur 4 und

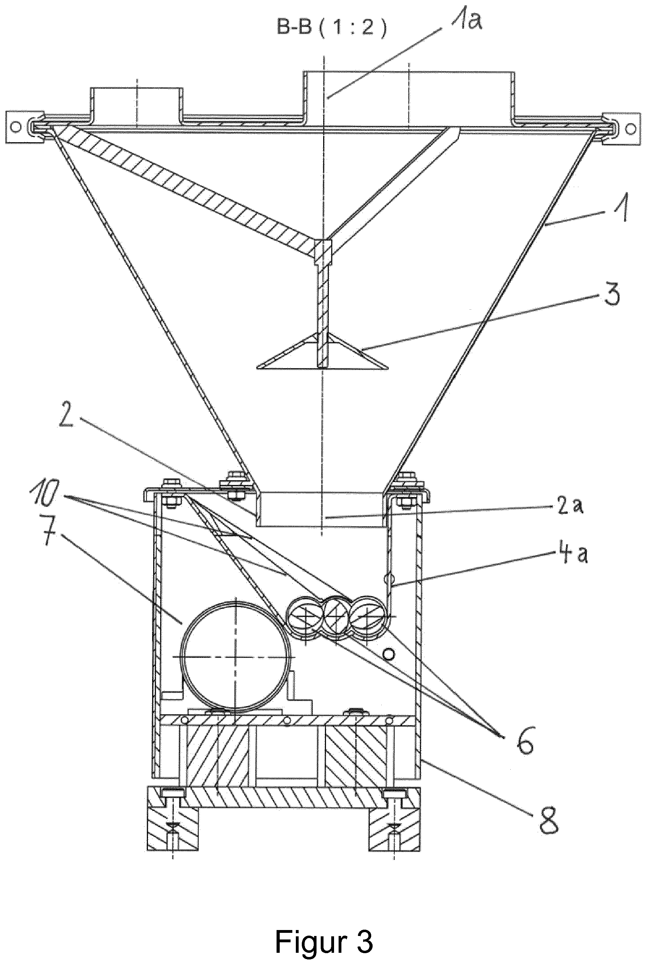

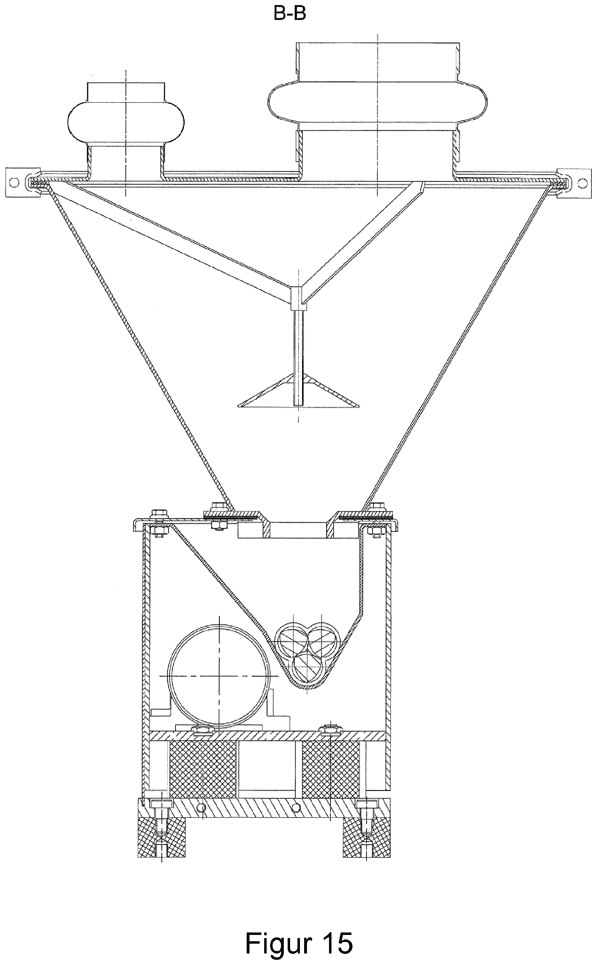

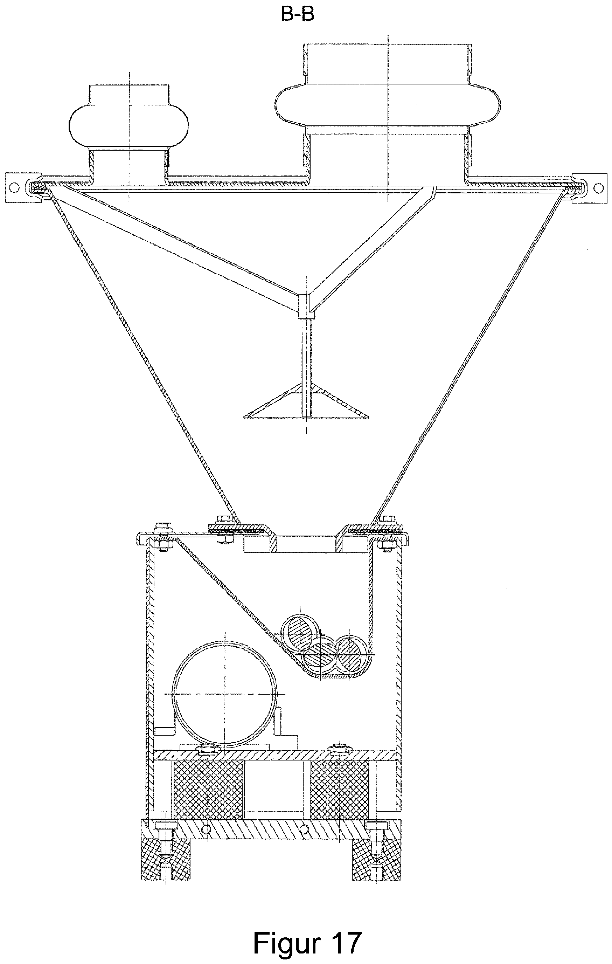

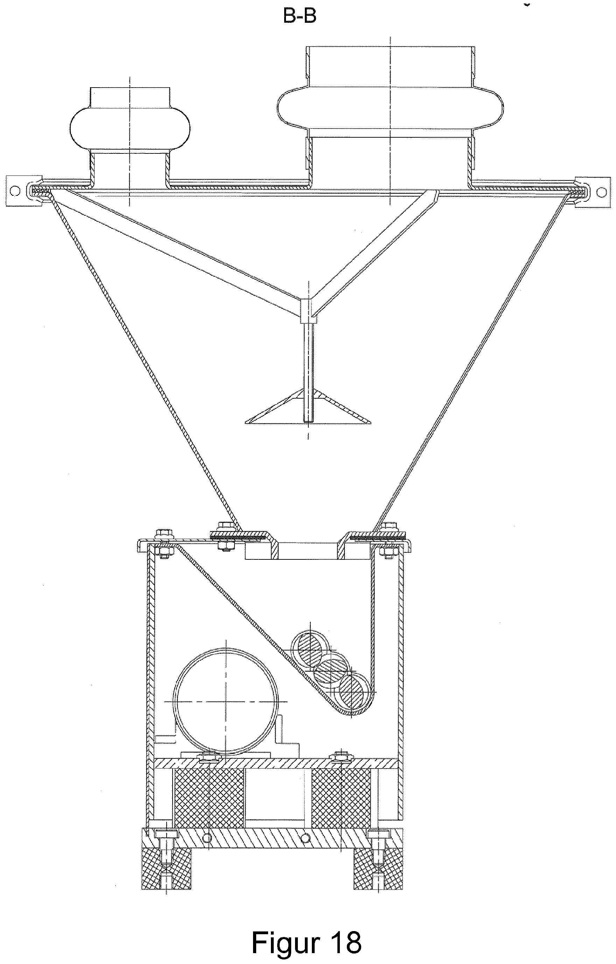

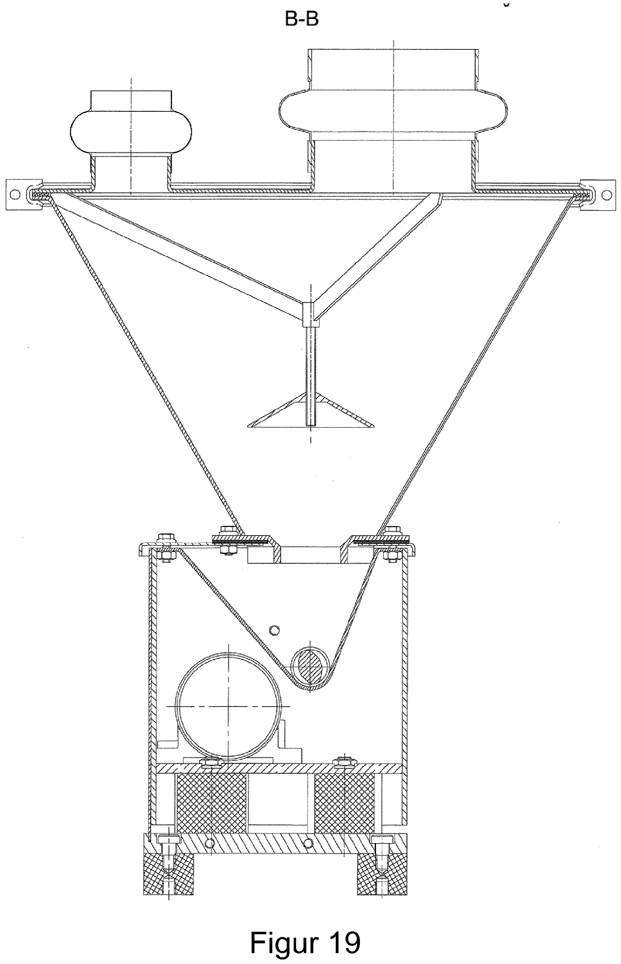

- Figuren 15 bis 19: weitere alternative Ausführungen gemäß der Erfindung, mit diversen Schneckenvariationen, in Ansichten gemäß Figur 3.

Der Massenfluss ist hier gleichbedeutend mit First-In-First-Out und gleichbedeutend mit geringer Verweilzeitverteilung.

Fig. 1: Die Zeichnung zeigt ein Dosiergerät, wie es der Erfindung entspricht mit der kegelförmigen Schüttgutvorlage (1), welche auf einem Gehäuse (8) (nicht zwingend erforderlich) sitzt, dem Antrieb (5) und dem Schneckenrohr (9). Übrige Komponenten sind durch das Gehäuse (8) verdeckt. Die Linien von A bis A und von B bis B definieren die Sichtachsen der Figuren 1 und 2.

Fig. 2: Schnitt A bis A. In dem Schnitt schaut man von oben in den Einzugsbereich der Förderschnecken (6). Durch den geschnitten dargestellten Austritt (2) fließt das Schüttgut in den unteren Teil der Erfindung. Der asymmetrische Trog (4), ergänzt durch die eingebauten Blenden (10), leitet das Schüttgut in Förderrichtung (12), lotrecht zu der Förderrichtung der Schnecken (11), zu den Förderschnecken (6). Die Anordnung der Blenden (10) zu dem Austritt (2) und die Geometrie des Trogs (4) beeinflussen maßgeblich zusammen mit dem/n Vibrationsantrieb/en (7) den Füllgrad der Förderschnecken (6). Die Positionierung der soeben beschriebenen Komponenten zueinander ist wesentlicher Teil der Erfindung und erzielt die Vorteile zum Stand der Technik. Die Blenden (10) bilden mit dem asymmetrischen Trog (4) drei gestaffelte Ebenen (siehe auch Figuren 3, 5, 6, 7), die die Förderschnecken (6) schrittweise, in Produktionsrichtung (11), für das darauf strömende Schüttgut freigeben. Die Förderschnecken (6) werden durch einen Antrieb mit Getriebe oder mehreren Antrieben (5) in Rotation versetzt. Die Förderschnecken (6) fördern das Schüttgut durch das Schneckenrohr (9) aus dem Dosiergerät heraus.

Fig. 3: In der kegelförmigen Schüttgut-Vorlage gibt der Schüttgut-Entlastungsteller (3) einen Ringspalt für das Schüttgut frei. Der Schüttgut-Entlastungsteller verhindert ein Komprimieren des Schüttguts und trägt weiterhin zur Aktivierung des Schüttguts bei und ermöglicht den Massenfluss in der Schüttgut-Vorlage (1). Die Aktivierung wird erzeugt durch den Vibrationsantrieb (7). Die dadurch resultierende Bewegung aktiviert das Schüttgut (Prinzip: Mikrowurf / siehe Handbuch Dosieren, Gerhard Vetter, Verlag: Vulkan Verlag Dez 2001, 2001, ISBN 10: 3802721993 / ISBN 13: 9783802721991).

Der Austritt aus der Produktvorlage (2) ist asymmetrisch ausgeführt. Siehe hierzu Figur 1 und den Abstand zwischen den Achsen (1a) und (1b). Die Asymmetrie unterstützt das Fließen brückenbildender Schüttgüter und ist ein wichtiger Teil der Erfindung. Eine Schüttgut-Produktbrücke lässt sich am einfachsten aufbauen, wenn die gegenüberliegenden Auflager, auf denen sich die Brückenenden aufstützen, symmetrisch sind. Durch die Symmetrie kann die Last des oben liegenden Schüttgut-Anteils auf die unterste Schicht des Schüttguts, dass sich auf der Höhe der Auflager befindet, abstützen. Durch die Symmetrie verteilt sich die Last gleichmäßig und die Schüttgut-Brücke kann sich festigen. Bei asymmetrischen Auflagern ist es nicht möglich, die Last gleichmäßig zu verteilen. Dadurch bricht die aufbauende Schüttgut-Brücke wieder in sich zusammen. Die Förderschnecken (6) sind hier jeweils 2-gängige, ineinander kämmende Konkavschnecken. In der Erfindung kommen jedoch 4- und 3-gängige, ineinander kämmende Konkavschnecken (nicht Stand der Technik) und Spiralschnecken (Stand der Technik) zum Einsatz. Die 4- und 3-gängigen, ineinander kämmenden Konkavschnecken haben mehrere Schüttgut-Abwurfflanken pro Umdrehung. Dadurch kann bei niedrigen Drehzahlen eine vorteilhafte Pulsationsreduzierung gegenüber dem Stand der Technik erreicht werden.

Fig. 4: Die Zeichnung definiert die Ebenen der Schnittzeichnungen in Fig. 5 - 7.

Anhand der ersten Schnittzeichnung Fig. 5 wird das Prinzip Massenfluss beschrieben, auch bekannt als First-In-First-Out oder geringe Verweilzeitverteilung. Weiterhin wird die Funktionsweise des Schüttgut-Entlastungstellers (3) beschrieben. In den nachfolgenden Figuren 6 und 7 ist dieser Bereich identisch.

Unterschiedlich in den Schnittzeichnungen Figuren 5 - 7 ist der Bereich im asymmetrischer Schneckentrog (4). In dem Bereich verdeckt die Schüttgutblende (10) teilweise die Schnecken (6). In Produktionsrichtung (11) werden die Schnecken (6) schrittweise freigegeben, so dass Schüttgut (17) von den Schnecken (6) in Produktionsrichtung (11) transportiert wird. Dieses Detail ist wesentlicher Teil der Erfindung. Durch die Geometrie, die Anzahl der Schnecken (6) und der Blenden wird in dem Bereich asymmetrischer Schneckentrog (4) ein Massenfluss erreicht; vgl. Linie (13) und (14) (Prinzip: Progressive Fördergeometrien, Buch: Handbuch Dosieren, Zweite Auflage, Gerhard Vetter (Hrsg.), Seite 102, Bild 3.40, ISBN 3-8027-2199-3, 9-783802-721991).

Fig. 5: In der kegelförmigen Schüttgut-Vorlage sinkt der Schüttgutpegel bei laufendem Dosiervorgang, im Prinzip, wie durch die Linien (13) und (14) dargestellt. Charakteristisch für den Massenfluss ist der nahezu parallele Verlauf der beiden Linien (13), (14). Die Linien (13), (14) sind beispielhaft für das beschriebene Prinzip Massenfluss. Nach diesem Prinzip fließt das Schüttgut in jeder Stelle des Dosiergeräts; vom höchsten bis zu dem tiefsten Punkt, Schnecken (6).

Die kegelförmige Schüttgut-Vorlage ist im normalen Dosierbetrieb mit dem Schüttgut (15) gefüllt. Unterhalb des Schüttgut-Entlastungstellers (3) ist ein freies Volumen (16).

Das Schüttgut (17) im Bereich asymmetrischer Schneckentrog (4) erreicht in diesem Schnitt alle Schnecken (6).

Fig. 6: Identisch zu Fig. 5 bis auf das Schüttgut (17) im Bereich asymmetrischer Schneckentrog (4).

Durch die eingebaute Schüttgutblende (10) wird in diesem Bereich eine Schnecke (6) abgedeckt. Dadurch wird die Schnecke (6) an dieser Stelle nicht mit dem Schüttgut (17) gefüllt.

Fig. 7: Identisch zu Fig. 5 bis auf das Schüttgut (17) im Bereich asymmetrischer Schneckentrog (4).

Durch die eingebaute Schüttgutblende (10) werden in diesem Bereich zwei Schnecken (6) abgedeckt. Dadurch werden die Schnecken (6) an dieser Stelle nicht mit dem Schüttgut (17) gefüllt.

Fig. 8 zeigt eine weitere Ausführungsform. Das Schneckenrohr wird anders ausgeführt. Die Schnecken schließen nicht bündig mit dem Rohr ab, sondern sind zurückgezogen. Somit ergibt sich eine kleine Ablagefläche. Durch den produktspezifischen Abstand "X" zwischen Schnecken 6 und Schneckenrohr 9 ergibt sich eine vorteilhafte Reduzierung der Pulsation.

Fig. 9 bis 12 zeigen eine alternative Ausführung gemäß der Erfindung mit Einbauten im Trog auf der steilen Trogseite. Das Gerät also wird unter Berücksichtigung der Funktion der Einzelkomponenten spiegelsymmetrisch gebaut.

So sind z.B. die Blenden nicht auf der schrägen Wand, sondern an der vertikalen Wand vorgesehen.

Fig. 13 bis 14 zeigen eine weitere alternative Ausführung gemäß der Erfindung, wobei der Verfahrensteil gespiegelt ist. Das Gerät wird auch hier unter Berücksichtigung der Funktion der Einzelkomponenten spiegelsymmetrisch gebaut. Dabei wird hier z.B. die vertikale Wand des Schneckentrogs mit der schrägen Wand getauscht.

Fig. 15 bis 19 zeigen weitere alternative Ausführungen gemäß der Erfindung, hier mit diversen Schneckenvariationen.

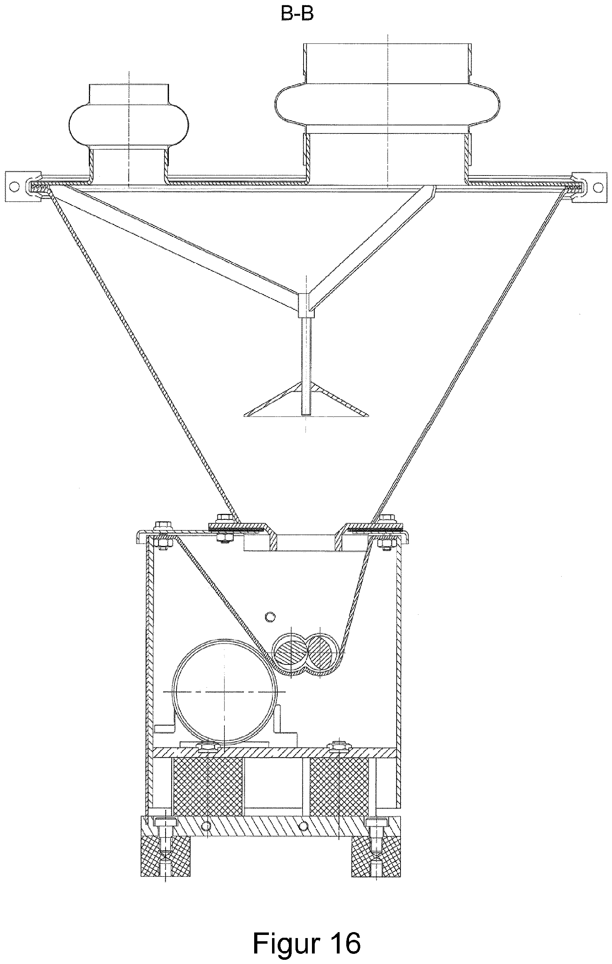

Die Schnecken liegen, in den Zeichnungen mit "Blickrichtung vor-Kopf", nicht mehr wie in Figur 3 auf einer gedachten horizontalen Linie, sondern sind z.B. in einer schrägen / gekippten Linie anordnet (Fig. 16 bis 19) oder sie sind z.B. in einem V angeordnet, mit anderen Worten, die mittlere von drei Schnecken ist nach unten versetzt.

### Arbeitsweise der Vorrichtung zum Dosieren von Schüttgütern

Im Folgenden wird die Arbeitsweise der erfindungsgemäßen Vorrichtung zum Dosieren von Schüttgütern im Detail erläutert:
Schritt 1: Das Schüttgut gelangt in die kegelförmige Schüttgut-Vorlage (1). Die Förderung des Schüttguts erfolgt im Allgemeinen aufgrund von Gravitation. Manuelle Befüllung sowie automatisierte Befüllung sind möglich.
Schritt 2: Das Schüttgut befindet sich ständiger Bewegung, daher komprimiert sich das Schüttgut nicht durch die Vibration. Die Vibration wird durch Vibrationsantriebe (7) hervorgerufen und ist jeweils auf die Flussrichtung des Schüttguts abgestimmt, sodass das kontinuierliche Fließen des Schüttguts erreicht wird.
Schritt 3: In der kegelförmigen Schüttgut-Vorlage (1) fließt das Schüttgut vom obersten Punkt des vorgelegten Schüttgut-Volumens durch einen verstellbaren Ringspalt, zwischen Schüttgut-Vorlage (1) und Schüttgut-Entlastungskegel (3) in Richtung Austritt (2). Die Teile (1), (2) und (3) sind asymmetrisch ausgeführt. Diese Besonderheit ist entscheidend für die Aktivierung nur bedingt und schlecht fließender Schüttgüter. Es wird ein Massenfluss erreicht und somit First-In-First-Out ermöglicht (geringe Verweilzeitverteilung, siehe oben).
Schritt 4: Unterhalb der kegelförmigen Schüttgut-Vorlage, im asymmetrischen Schneckentrog (4), bildet das Schüttgut einen Schüttkegel, mit einem für das Schüttgut spezifischen Winkel.
Schritt 5: In dem Trog (4) und auf den Schüttgut-Blenden (10) wird das Schüttgut durch die Vibration den Förderschnecken (6) zugeführt.
Schritt 6: Durch den kreisrunden Austritt (2) und den eingebauten Schüttgut-Blenden (10) wird ein Massenfluss erreicht. Massenfluss bedeutet, dass in einem horizontalen Schnitt durch das Schüttgut eine annähernd einheitliche Verweilzeit bei jedem Schüttgut-Partikel vorliegt.
Schritt 7: Die Förderschnecken (6), angetrieben durch die Antriebe (5), fördern das Schüttgut aus dem Trog in das Schneckenrohr (9).
Schritt 8: Die Förderschnecken (6) fördern das Schüttgut durch das Schneckenrohr (9) aus dem Dosiergerät.

### Bezugszeichenliste

- 1: kegelförmige Schüttgutvorlage
- a: Symmetrieachse der kegelförmigen Schüttgutvorlage (1)
- 2: Asymmetrischer Austritt aus der Produktvorlage / asymmetrisch zu (1a)
- a: Symmetrieachse des Austritts (2)
- 3: Schüttgutentlastungsteller
- 4: Asymmetrischer Schneckentrog
- 5: Antrieb(e)
- 6: Förderschnecken
- 7: Vibrationsantrieb(e)
- 8: Gehäuse
- 9: Schneckenrohr
- 10: Schüttgutblende
- 11: Produktionsrichtung
- 12: Förderrichtung

Die weiteren Positionen dienen der Darstellung des Fließweg des Schüttguts im Dosiergerät:
- 13: Füllstand Schüttgut
- 14: Durch den Dosiervorgang abgesunkener Füllstand
- 15: Schüttgut im Bereich kegelförmige Schüttgutvorlage (1)
- 16: Luft / freies Volumen unterhalb des Schüttgutentlastungstellers (3)
- 17: Schüttgut im Bereich asymmetrischer Schneckentrog (4)

## Patentansprüche

1. Vorrichtung zum Dosieren von Schüttgütern mit einem Einlass im oberen Bereich und mit mehreren Förderschnecken (6), wobei die Vorrichtung Schüttgutblenden (10) oberhalb der Förderschnecken (6) aufweist, die Förderschnecken (6) in unterschiedliche Bereiche aufgeteilt sind und die unterschiedlichen Bereiche der Förderschnecken (6) von den Schüttgutblenden (10) abgedeckt werden,
wobei die abgedeckten Bereiche als quer zur Längsachse der Förderschnecken (6) verlaufende Zonen ausgebildet sind,
**dadurch gekennzeichnet,**
**dass** die eine erste Förderschnecke nicht von den Schüttgutblenden abgedeckt wird, der hintere Bereich der benachbarten zweiten Förderschnecke von den Schüttgutblenden abgedeckt wird und bei einer dritten Förderschnecke, die der zweiten Förderschnecke benachbart ist, alle Bereiche bis auf den vorderen Bereich abgedeckt werden.

2. Vorrichtung zum Dosieren von Schüttgütern nach Anspruch 1,
**dadurch gekennzeichnet,**
**dass** die quer zur Längsachse der Förderschnecken (6) verlaufende Zonen sich über die gesamte Breite der jeweiligen Förderschnecke (6) erstrecken.

3. Vorrichtung zum Dosieren von Schüttgütern nach Anspruch 1,
**dadurch gekennzeichnet,**
**dass** die vorderen Bereiche der Förderschnecken (6) von den Schüttgutblenden (10) nicht abgedeckt werden.

4. Vorrichtung zum Dosieren von Schüttgütern nach Anspruch 1,
**dadurch gekennzeichnet,**
**dass** die Schüttgutblenden (10) schräg nach unten in Richtung der Förderschnecken (6) angeordnet sind.

5. Vorrichtung zum Dosieren von Schüttgütern nach Anspruch 1,
**dadurch gekennzeichnet,**
**dass** die Förderschnecken (6) horizontal nebeneinander angeordnet sind.

6. Vorrichtung zum Dosieren von Schüttgütern nach Anspruch 1,
**dadurch gekennzeichnet,**
**dass** die Förderschnecken (6) ineinander eingreifen.

7. Vorrichtung zum Dosieren von Schüttgütern nach Anspruch 1,
**dadurch gekennzeichnet,**
**dass** eine erste, außen liegende, Förderschnecke überhaupt nicht von den Schüttgutblenden (10) abgedeckt wird und die benachbarten Förderschnecken stufenweise stärker abgedeckt werden, wobei die Abdeckungen immer den hinteren Bereich der Förderschnecken umfassen, und die am weitesten von der ersten Förderschnecke (6) entfernte Förderschnecke bis auf einen vorderen Bereich vollständig abgedeckt wird.

8. Vorrichtung zum Dosieren von Schüttgütern nach Anspruch 1,
**dadurch gekennzeichnet,**
**dass** die Vorrichtung eine Schüttgutvorlage (1) aufweist und
**dass** der Auslass (2) der Schüttgutvorlage (1) im Bereich der vorderen Enden der Förderschnecken (6) angeordnet ist.

9. Vorrichtung zum Dosieren von Schüttgütern nach Anspruch 1,
**dadurch gekennzeichnet,**
**dass** die Vorrichtung als Vibrationsschneckendosierer ausgebildet ist.

10. Vorrichtung zum Dosieren von Schüttgütern nach Anspruch 1,
**dadurch gekennzeichnet,**
**dass** alle das Produkt berührenden Teile während des Betriebs vibrieren.

11. Vorrichtung zum Dosieren von Schüttgütern nach Anspruch 1,
**dadurch gekennzeichnet,**
**dass** die kegelförmige Schüttgutvorlage der Vorrichtung und/oder der Schüttgutentlastungsteller der Vorrichtung
und/oder der Schneckentrog der Vorrichtung und/oder die Förderschnecken der Vorrichtung und/oder das Schneckenrohr der Vorrichtung und/oder die Schüttgutblende der Vorrichtung während des Betriebs vibrieren.

## Claims

1. An apparatus for metering bulk materials, comprising an inlet in the upper region and comprising a plurality of conveying screws (6), the apparatus having bulk material screens (10) above the conveying screws (6), the conveying screws (6) being divided into different regions and the different regions of the conveying screws (6) being covered by the bulk material screens (10), the covered regions being formed as zones extending transversely to the longitudinal axis of the conveying screws (6), **characterized in that** a first conveying screw is not covered by the bulk material screens, the rear region of the adjacent second conveying screw is covered by the bulk material screens, and, in the case of a third conveying screw which is adjacent to the second conveying screw, all regions except for the front region are covered.

2. The apparatus for metering bulk materials according to claim 1, **characterized in that** the zones extending transversely to the longitudinal axis of the conveying screws (6) extend over the entire width of the relevant conveying screw (6).

3. The apparatus for metering bulk materials according to claim 1, **characterized in that** the front regions of the conveying screws (6) are not covered by the bulk material screens (10).

4. The apparatus for metering bulk materials according to claim 1, **characterized in that** the bulk material screens (10) are arranged obliquely downward in the direction of the conveying screws (6).

5. The apparatus for metering bulk materials according to claim 1, **characterized in that** the conveying screws (6) are arranged horizontally next to one another.

6. The apparatus for metering bulk materials according to claim 1, **characterized in that** the conveying screws (6) engage in one another.

7. The apparatus for metering bulk materials according to claim 1, **characterized in that** a first, outer conveying screw is not covered by the bulk material screens (10) at all, and the adjacent conveying screws are covered stepwise to a greater extent, the covers always encompassing the rear region of the conveying screws, and the conveying screw furthest away from the first conveying screw (6) being completely covered except for a front region.

8. The apparatus for metering bulk materials according to claim 1, **characterized in that** the apparatus has a bulk material feed (1) and **in that** the outlet (2) of the bulk material feed (1) is arranged in the region of the front ends of the conveying screws (6).

9. The apparatus for metering bulk materials according to claim 1, **characterized in that** the apparatus is designed as a vibrating screw metering unit.

10. The apparatus for metering bulk materials according to claim 1, **characterized in that** all parts contacting the product vibrate during operation.

11. The apparatus for metering bulk materials according to claim 1, **characterized in that** the conical bulk material feed of the apparatus and/or the bulk material relief plate of the apparatus and/or the screw trough of the apparatus and/or the conveying screws of the apparatus and/or the screw pipe of the apparatus and/or the bulk material screen of the apparatus vibrate during operation.

## Revendications

1. Dispositif permettant le dosage de produits en vrac comportant une entrée dans la région supérieure et comportant plusieurs vis sans fin (6), le dispositif présentant des obturateurs de produit en vrac (10) au-dessus des vis sans fin (6), les vis sans fin (6) étant divisées en différentes régions et les différentes régions des vis sans fin (6) étant recouvertes par les obturateurs de produit en vrac (10), les régions recouvertes étant réalisées en tant que zones s'étendant transversalement à l'axe longitudinal des vis sans fin (6), **caractérisé en ce qu'une** première vis sans fin n'est pas recouverte par les obturateurs de produit en vrac, la région arrière de la deuxième vis sans fin adjacente est recouverte par les obturateurs de produit en vrac et, dans le cas d'une troisième vis sans fin adjacente à la deuxième vis sans fin, toutes les régions sont recouvertes, à l'exception de la région avant.

2. Dispositif permettant le dosage de produits en vrac selon la revendication 1, **caractérisé en ce que** les zones s'étendant transversalement à l'axe longitudinal des vis sans fin (6) s'étendent sur toute la largeur de la vis sans fin (6) respective.

3. Dispositif permettant le dosage de produits en vrac selon la revendication 1, **caractérisé en ce que** les régions avant des vis sans fin (6) ne sont pas recouvertes par les obturateurs de produit en vrac (10).

4. Dispositif permettant le dosage de produits en vrac selon la revendication 1, **caractérisé en ce que** les obturateurs de produit en vrac (10) sont disposés obliquement vers le bas en direction des vis sans fin (6).

5. Dispositif permettant le dosage de produits en vrac selon la revendication 1, **caractérisé en ce que** les vis sans fin (6) sont disposées horizontalement côte à côte.

6. Dispositif permettant le dosage de produits en vrac selon la revendication 1, **caractérisé en ce que** les vis sans fin (6) viennent en prise les unes dans les autres.

7. Dispositif permettant le dosage de produits en vrac selon la revendication 1, **caractérisé en ce qu'une** première vis sans fin extérieure n'est pas du tout recouverte par les obturateurs de produit en vrac (10) et les vis sans fin adjacentes sont progressivement recouvertes de plus en plus, les recouvrements comprenant toujours la région arrière des vis sans fin et la vis sans fin la plus éloignée de la première vis sans fin (6) étant complètement recouverte, à l'exception d'une région avant.

8. Dispositif permettant le dosage de produits en vrac selon la revendication 1, **caractérisé en ce que** le dispositif présente une alimentation en produit en vrac (1) et **en ce que** la sortie (2) de l'alimentation en produit en vrac (1) est disposée dans la région des extrémités avant des vis sans fin (6).

9. Dispositif permettant le dosage de produits en vrac selon la revendication 1, **caractérisé en ce que** le dispositif est réalisé sous la forme d'un doseur à vis à vibrations.

10. Dispositif permettant le dosage de produits en vrac selon la revendication 1, **caractérisé en ce que** toutes les parties en contact avec le produit vibrent pendant le fonctionnement.

11. Dispositif permettant le dosage de produits en vrac selon la revendication 1, **caractérisé en ce que** l'alimentation en produit en vrac conique du dispositif et/ou l'actionneur de décharge de produit en vrac du dispositif et/ou le logement de vis du dispositif et/ou les vis sans fin du dispositif et/ou le tube de vis du dispositif et/ou les obturateurs de produit en vrac du dispositif vibrent pendant le fonctionnement.
